# EUROPÄISCHE PATENTSCHRIFT

(11) **EP 4 072 983 B1**
(45) Veröffentlichungstag und Bekanntmachung des Hinweises auf die Patenterteilung: **13.09.2023**
(21) Anmeldenummer: 20816528.2
(22) Anmeldetag: 07.12.2020
(51) Int. Cl.: B65H 26/02, B29C 48/355, B29C 48/92, B29C 48/00, B29C 48/21

(54) **MESSEINRICHTUNG UND VERFAHREN ZUR DETEKTION VON LOKALEN VERDICKUNGEN IN EINER FOLIENBAHN**
MEASURING DEVICE AND METHOD FOR DETECTING LOCAL THICKNESSES IN A FILM WEB
DISPOSITIF DE MESURE ET PROCÉDÉ DE DÉTECTION DES ÉPAISSISSEMENTS LOCAUX DANS UNE BANDE DE FEUILLE

(30) Priorität: 12.12.2019 EP 19215539
(43) Veröffentlichungstag der Anmeldung: 19.10.2022
(73) Patentinhaber: Covestro Intellectual Property GmbH & Co. KG, 51373 Leverkusen (DE)
(72) Erfinder: PAULUS, Alexander, 51371 Leverkusen (DE); MEYER, Klaus, 41539 Dormagen (DE); NICKEL, Joerg, 41539 Dormagen (DE); HOLTERMANN, Jan, 41472 Neuss- Grefrath (DE)
(74) Vertreter: Levpat
(86) Internationale Anmeldenummer: PCT/EP2020/084835
(87) Internationale Veröffentlichungsnummer: WO 2021/116001

(56) Entgegenhaltungen:
- JP-A- 2002 104 701
- US-A- 4 609 336
- US-A- 4 901 577
- US-A- 5 762 252
- US-A1- 2012 137 533

## Beschreibung

Die Erfindung betrifft eine Messeinrichtung und ein Verfahren, mit deren Hilfe lokale Verdickungen in einer Folienbahn, insbesondere einer Extrusions- und/oder Coextrusionsfolie, detektiert werden können.

Bei der Herstellung von Folienbahnen durch Extrusion und/oder Coextrusion kann es vorkommen, dass in der Folienbahn pickelförmige Verdickungen auftreten, die beispielsweise aufgrund von Produktionsfehlen durch eine Materialhäufung oder durch einen Einschluss von Verunreinigung in dem Material der Folienbahn entstehen können. Es besteht ein ständiges Bedürfnis lokale Verdickungen in einer Folienbahn schnell und einfach detektieren zu können, beispielsweise um derartig defekte Längenbereiche der Folienbahn abtrennen zu können. Dokumente US 2012/0137533 und US 5 762 252 offenbaren Messeinrichtungen zur Detektion von lokalen Verdickungen in einer Bahn.

Es ist die Aufgabe der Erfindung Maßnahmen aufzuzeigen, die eine schnelle und einfache Detektion von lokalen Verdickungen in einer Folienbahn ermöglichen.

Die Lösung der Aufgabe erfolgt erfindungsgemäß durch eine Messeinrichtung mit den Merkmalen des Anspruchs 1 und ein Verfahren mit den Merkmalen des Anspruchs 6. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft eine Messeinrichtung zur Detektion von lokalen Verdickungen in einer Folienbahn, insbesondere einer Extrusions- und/oder Coextrusionsfolie, mit einer ersten Walze zum Abrollen an der, bevorzugt an der Walze entlangbewegbaren Folienbahn, einer mittelbar über die Folienbahn an der ersten Walze abstützbaren zweiten Walze zum Abrollen an der entlangbewegbaren Folienbahn, wobei die zweite Walze in Dickenrichtung der entlangbewegbaren Folienbahn, insbesondere in vertikaler Richtung, nachgiebig geführt ist, und mindestens ein zur ersten Walze und/oder zur entlangbewegbaren Folienbahn ortsfester Abstandssensor zur Detektion eines Abstands der zweiten Walze.

Wenn die Folienbahn zwischen der ersten Walze und der zweiten Walze hindurchgeführt wird, ist es möglich, dass eine lokale Verdickung der Folienbahn die zweite Walze entlang ihrer linearen Führung von der ersten Walze wegdrücken kann. Die zweite Walze erfährt dadurch eine Abstandsänderung zu der ersten Walze, die von dem mindestens einen Abstandssensor detektiert werden kann. Wenn die von dem Abstandssensor detektierte Abstandsänderung einen vordefinierten Schwellwert übersteigt, kann dadurch ein Längenbereich der Folienbahn detektiert werden, der den geforderten Qualitätsansprüchen bezüglich der Dicke der Folienbahn nicht entspricht. Mit Hilfe der zweiten Walze kann die Folienbahn gleichzeitig über die gesamte Breite abgetastet und auf lokale Verdickungen untersucht werden. Hierbei wird die Erkenntnis ausgenutzt, dass es gar nicht erforderlich ist, die genau Position der Verdickung in Breitenrichtung und/oder die genaue Form und Größe der Verdickung zu kennen. Wenn die Verdickung in der Folienbahn zu einem späteren Zeitpunkt beseitigt werden soll, wird sowieso der entsprechende Längenbereich mit der Verdickung aus dem in der Regel als Endlosmaterial vorliegenden Folienbahn herausgeschnitten und gegebenenfalls die Schnittkanten miteinander verbunden. Zusätzlich oder alternativ ist es möglich, wenn die als Endlosmaterial vorliegende Folienbahn später vereinzelt werden soll, dasjenige vereinzelte Folienstück, in dem die Verdickung vorliegt, als Ausschuss wegzunehmen. Für diese Maßnahmen ist es lediglich erforderlich den Längenbereich mit dem als Defekt erkannten Verdickung zu kennen, was mit Hilfe der in Dickenrichtung der Folienbahn linear verschiebbaren zweiten Walze schnell und einfach zu realisieren ist. Durch die von einer lokalen Verdickung der Folienbahn in Dickenrichtung der Folienbahn verlagerbare zweite Walze ist eine schnelle und einfache Detektion von lokalen Verdickungen in einer Folienbahn ermöglicht.

Die zweite Walze ist drehbar in einer Linearführung geführt. Die Linearführung ist insbesondere in Dickenrichtung der Folienbahn ausgerichtet, das heißt in Richtung der Flächennormalen des zwischen der ersten Walze und der zweiten Walze befindlichen Längenbereichs der Folienbahn. Vorzugsweise ist die zweite Walze in vertikaler Richtung verlagerbar, so dass insbesondere die zweite Walze mit ihrem Eigengewicht in Schwerkraftrichtung auf der ersten Walze abgestützt ist. Eine lokale Verdickung in der Folienbahn kann dann die zweite Walze entgehen der Schwerkraftrichtung verlagern. Zusätzlich oder alternativ kann die zweite Walze mit Hilfe einer Feder gegen die erste Walze gedrückt sein. Insbesondere ist die zweite Walze bei der linearen Verlagerung mit Hilfe eines Dämpferelements gedämpft geführt, vorzugsweise um Schwingungen zu dämpfen und/oder ein Abheben von der Folienbahn beziehungsweise von der Verdickung zu vermeiden. Die erste Walze ist nur drehbar gelagert und in Dickenrichtung der Folienbahn ortsfest festgehalten. Durch die auf der ersten Walze abgestützte zweite Walze können Eigenschwingungen der Messeinrichtung kompensiert werden, da beide Walzen bei einer Eigenschwingung gleichermaßen verlagert werden und eine Relativlage der zweiten Walze zur ersten Walze bei der Eigenschwingung konstant bleibt. Eine Änderung der Relativlage der zweiten Walze zur ersten Walze in Dickenrichtung der Folienbahn ist dadurch im Wesentlichen ausschließlich durch eine lokale Verdickung in der Folienbahn verursacht.

Insbesondere ist der mindestens eine Abstandssensor als berührungslos messender Sensor, insbesondere Laserentfernungsmesser, ausgestaltet ist, wobei die zweite Walze für den mindestens einen Abstandssensor die erste Walze und/oder die Folienbahn vollständig abschattet. Der mindestens eine Abstandssensor kann dadurch in einem von der ersten Walze wegweisenden rückwärtigen Bereich der zweiten Walze vorgesehen sein. Der Abstandssensor kann dadurch in einem Bauraum vorgesehen sein, in dem der Abstandssensor nicht andere Komponenten der Messeinrichtung und die Folienbahn stören kann. Da die zweite Walze die erste Walze und/oder die Folienbahn unabhängig von der Relativlage der zweiten Walzen relativ zur ersten Walze entlang der Linearführung in Dickenrichtung der Folienbahn abschattet, kann eine Beeinträchtigung des Messergebnisses des Abstandssensors durch die erste Walze sicher vermieden sein. Eine Situation, in welcher ein von dem Abstandssensor ausgesendetes Messsignal zumindest teilweise von der ersten Walze und/oder von der Folienbahn reflektiert wird, kann dadurch sicher vermieden werden. Da der Abstandssensor nicht die Folienbahn direkt sondern nur indirekt über die zweite Walze abtastet, kann die Anzahl der Abstandssensoren und/oder die Komplexität der Abstandssensoren reduziert werden. Hierbei wird die Erkenntnis ausgenutzt, dass eine lokale Verdickung der Folienbahn die zweite Walze als Ganzes linear verschiebt, so dass die Abstandssensoren lediglich die Abstandsänderung der zweiten Walze detektieren brauchen. Hierzu kann es bereits ausreichend sein, wenn nur genau ein Abstandssensor irgendeine Stelle der zweiten Walze entlang ihrer Längserstreckung betrachtet. Vorzugsweise sind zwei bis sechs, besonders bevorzugt drei bis fünf, Abstandssensoren vorgesehen. Insbesondere ist der mindestens eine Abstandssensor ausgestaltet eine Abstandsänderung der zweiten Walze in Dickenrichtung der Folienbahn von mindestens 12,0 µm, insbesondere mindestens 10,0 µm, vorzugsweise mindestens 8,0 µm, weiter bevorzugt mindestens 5,0 µm und besonders bevorzugt mindestens 3,0 µm zu detektieren, was mit Hilfe eines Laserentfernungsmesser ausgestalteten Abstandssensor leicht möglich ist.

Die erste Walze ist in einem ersten Rahmenteil drehbar gelagert, wobei die zweite Walze in einem zweiten Rahmenteil drehbar gelagert und linear geführt ist, wobei das zweite Rahmenteil zwischen einer geschlossenen Position und einer geöffneten Position schwenkbar mit dem ersten Rahmenteil gekoppelt ist, wobei insbesondere das zweite Rahmenteil mit dem ersten Rahmenteil in der geschlossenen Position bewegungsfest arretierbar ist. Für Wartungsarbeiten und/oder zum Einfädeln einer Folienbahn kann die Messeinrichtung aufgeklappt werden. Hierzu kann beispielsweise ein Anschlagspuffer, beispielsweise ein Gummipuffer, vorgesehen sein, an dem das zweite Rahmenteil beim Erreichen der geöffneten Position anschlagen kann. Zusätzlich oder alternativ kann ein Anschlagspuffer, beispielsweise ein Gummipuffer, vorgesehen sein, an dem das zweite Rahmenteil beim Erreichen der geschlossenen Position anschlagen kann. Dadurch können die Endlagen des zweiten Rahmenteils definiert vorgeben werden und ein Beschädigung durch zu hartes Anschlagen vermieden werden. Durch die Arretierung des zweiten Rahmenteils mit dem ersten Rahmenteil in der geschlossenen Position, beispielsweise durch eine Verclippsung, Verklemmung, Verschraubung, Verrastung oder Ähnliches, kann eine ortsfeste Befestigung erreicht werden, so dass die Messeinrichtung nur als Ganzes in Folge von Eigenschwingungen schwingen kann. Eine Relativbewegung der zweiten Walze relativ zur ersten Walze infolge von Eigenschwingungen der Messeinrichtung kann dadurch vermieden werden. Mit den Rahmenteilen können Abdeckungen, beispielsweise Aluminium-Nutenprofile mit angebrachten Flächenelementen, befestigt sein, um die Walzen und die Abstandssensoren einzuhausen. Ein Eindringen von Verschmutzungen, welche die Messung beeinträchtigen könnten, ist dadurch vermieden. Zudem kann bei der Verwendung von Laserlicht für den mindestens einen Abstandssensors ein Austritt von Laserlicht vermieden und ein ausreichender Arbeitsschutz gewährleistet werden. Das erste Rahmenteil und das zweite Rahmenteil können über Gasdruckfedern oder Ähnliches miteinander gekoppelt sein, um das Aufklappen und/oder Zuklappen der Messeinrichtung zu dämpfen.

Besonders bevorzugt ist der mindestens eine Abstandssensor mit dem zweiten Rahmenteil befestigt. Wenn das zweite Rahmenteil ortsfest mit dem ersten Rahmenteil befestigt ist, ist es ausreichend, wenn der Abstandssensor die Abstandsänderung der zweiten Walze relativ zum zweiten Rahmenteil detektiert, da dies identisch mit der Abstandsänderung der zweiten Walze zu dem ersten Rahmenteil und der ersten Walze ist. Die Komplexität der Messtechnik kann dadurch reduziert werden und der mindestens eine Abstandssensor leicht in einem unkritischen Bauraum positioniert werden.

Insbesondere ist eine mit dem mindestens einen Abstandssensor gekoppelte Auswerteeinrichtung vorgesehen, wobei die Auswerteeinrichtung ausgestaltet ist in dem Fall einer einen vorgegebenen Schwellwert übersteigende Abstandsänderung der zweiten Walze relativ zu dem mindestens einen Abstandssensors ein Signal auszugeben, wobei das Signal von einer an der Auswerteeinrichtung anschließbaren Markierungseinrichtung zum Markieren eines als defekt bewerteten Längenabschnitts der Folienbahn und/oder einer an der Auswerteeinrichtung anschließbaren Schneideinrichtung zum Abtrennen eines als defekt bewerteten Längenabschnitts der Folienbahn weiterverarbeitbar ist. Die Auswerteeinrichtung kann beispielsweise die von dem mindestens einen Abstandssensor gemessene Abstandsänderung der zweiten Walze mit einem Schwellwert vergleichen, um eine zu sensitive Reaktion zu vermeiden und vernachlässigbare Dickenschwankungen der Folienbahn zuzulassen. Wenn die Auswerteeinheit einen durch eine lokale Verdickung verursachten Defekt feststellt, indem die detektierte Abstandsänderung den Schwellwert übersteigt, kann die Auswerteeinheit durch das generierte Signal adäquate Maßnahmen veranlassen. Beispielsweise kann mit Hilfe des Signals die Markierungseinrichtung veranlasst werden den defekten Längenbereich der Folienbahn durch ein aufgeklebtes Etikett zu markieren. Mit Hilfe dieses Etiketts und/oder des von der Auswerteeinrichtung gesendeten Signals kann die Schneideinrichtung den defekten Längenbereich herausschneiden.

Ein weiterer Aspekt der Erfindung betrifft eine Förderstrecke zum Fördern einer Folienbahn, insbesondere einer Extrusions- und/oder Coextrusionsfolie, mit einer Vortriebseinrichtung zum Vortrieb der Folienbahn, einer Messeinrichtung, die wie vorstehend beschrieben aus- und weitergebildet sein kann, zur Detektion von lokalen Verdickungen in der durch die Messeinrichtung durchgeführten Folienbahn, einer der Messeinrichtung vorgeschalteten Bahnreiningungseinrichtung zur Abtrennung von Verunreinigungen, insbesondere zur Neutralisierung von statischen Ladungen durch mindestens eine aufgebrachte Ionenwolke und/oder Absaugung der Verunreinigungen, wobei insbesondere die Messeinrichtung als Ganzes separat abgestützt und/oder gefedert ist. Die Bahnreiningungseinrichtung kann beispielsweise elektrostatisch an der Folienbahn anhängende Verunreinigungen entfernen, so dass die Messeinrichtung nur nicht mehr entfernbare Verunreinigungen in Form von lokalen Verdickungen der Folienbahn detektiert. Durch die separate Abstützung und/oder Federung der gesamten Messeinrichtung kann die Messeinrichtung von den Eigenschwingungen der übrigen Komponenten der Förderstrecke entkoppelt werden. Unnötige Schwingungen und/oder Stöße, welche die Messung beeinträchtigen könnten, sind dadurch vermieden. Durch die von einer lokalen Verdickung der Folienbahn in Dickenrichtung der Folienbahn verlagerbare zweite Walze ist eine schnelle und einfache Detektion von lokalen Verdickungen in einer Folienbahn ermöglicht.

Ein weiterer Aspekt der Erfindung betrifft ein Verfahren zur Detektion von lokalen Verdickungen in einer Folienbahn, insbesondere einer Extrusions- und/oder Coextrusionsfolie, mit Hilfe einer Messeinrichtung, die wie vorstehend beschrieben aus- und weitergebildet sein kann, mit den Schritten Hindurchbewegen der Folienbahn zwischen der ersten Walze und der auf der ersten Walze abgestützten zweiten Walze, wobei die zweite Walze in Dickenrichtung der entlangbewegbaren Folienbahn, insbesondere in vertikaler Richtung, nachgiebig geführt ist, Detektion einer durch eine lokalen Verdickungen verursachten Abstandsänderung der zweiten Walze zur ersten Walze und in dem Fall, dass eine einen vorgegebenen Schwellwert übersteigende Abstandsänderung der zweiten Walze detektiert wird, Ausgeben des Signals, wobei insbesondere das Signal von einer Markierungseinrichtung zum Markieren eines als defekt bewerteten Längenabschnitts der Folienbahn und/oder einer Schneideinrichtung zum Abtrennen eines als defekt bewerteten Längenabschnitts der Folienbahn weiterverarbeitbar ist. Durch die von einer lokalen Verdickung der Folienbahn in Dickenrichtung der Folienbahn verlagerbare zweite Walze ist eine schnelle und einfache Detektion von lokalen Verdickungen in einer Folienbahn ermöglicht. Das Verfahren kann im Übrigen wie vorstehend beschrieben aus- und weitergebildet sein.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische teilgeschnittene Vorderansicht einer Messeinrichtung,
Fig. 2: eine schematische teilgeschnittene Seitenansicht einer Förderstrecke mit der Messeinrichtung aus Fig. 1 und
Fig. 3: eine schematische teilgeschnittene Seitenansicht der Förderstrecke aus Fig. 2 mit der Messeinrichtung in einer geöffneten Position.

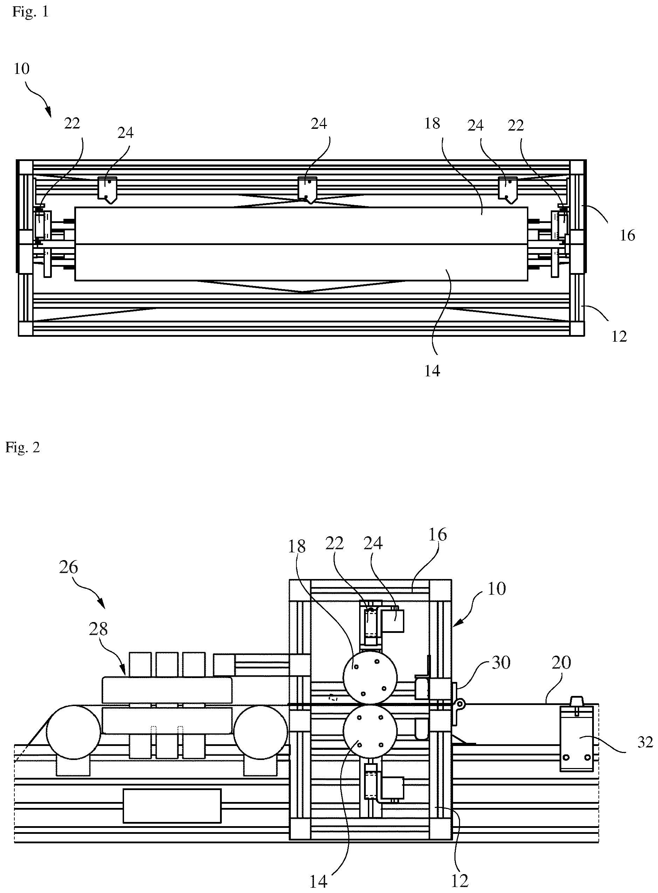

Die in Fig. 1 dargestellte Messeinrichtung 10 weist eine in einem unteren ersten Gestell 12 drehbar gelagerte erste Walze 14 und eine in einem oberen zweiten Gestell 16 drehbar gelagerte zweite Walze 18 auf. Zwischen der ersten Walze 14 und der auf der ersten Walze 12 abgestützten zweiten Walze 18 kann eine Folienbahn 20 von einer Vortriebseinrichtung hindurchgeführt werden. Die zweite Walze 18 ist zusätzlich mit Hilfe einer Linearführung 22 in Dickenrichtung der Folienbahn 20, die im vorliegenden Ausführungsbeispiel mit der Vertikalrichtung zusammenfällt, nachgiebig geführt. Wenn die Folienbahn 20 eine lokale Verdickung aufweisen sollte, kann diese Verdickung bei dem Transport der Folienbahn 20 zwischen den Walzen 14, 18 hindurch die zweite Walze 18 entgegen der Schwerkraftrichtung in Dickenrichtung von der ersten Walze 14 wegdrücken. Mit Hilfe mindestens eines mit dem zweiten Gestell 16 verbundenen Abstandsensors 24 kann diese Verlagerung der zweiten Walze 18 als Abstandsänderung gemessen werden. Hierbei entspricht die Abstandsverkürzung der zweiten Walze 18 zum Abstandsensor 24 einer durch die lokale Verdickung der Folienbahn 20 verursachten Abstandsvergrößerung der zweiten Walze 18 zur ersten Walze 14 und/oder zur Folienbahn 20. Wenn die von dem Abstandsensor 24 gemessene Abstandsänderung ein mit Hilfe eines vordefinierten Schwellwerts abgebildetes tolerierbares Ausmaß übersteigt, kann der dadurch als defekt identifizierte Längenabschnitt der Folienbahn 20 markiert und/oder herausgeschnitten werden.

Wie in Fig. 2 dargestellt, kann eine zum Transport der Folienbahn 20 vorgesehene Förderstrecke 26 eine der Messeinrichtung 10 vorgeschaltete Bahnreiningungseinrichtung 28 aufweisen. Die Bahnreiningungseinrichtung 28 kann Verunreinigungen auf den Oberflächen der Folienbahn 20 absaugen und/oder wegblasen. Insbesondere kann die Bahnreiningungseinrichtung 28 elektrostatisch anhaftende Verunreinigungen dadurch entfernen, dass die Bahnreiningungseinrichtung 28 mindestens eine Ionenwolken auf die Oberflächen der Folienbahn 20 appliziert, um die elektrostatisch anhaftenden Verunreinigungen zu neutralisieren und leichter abtrennen zu können.

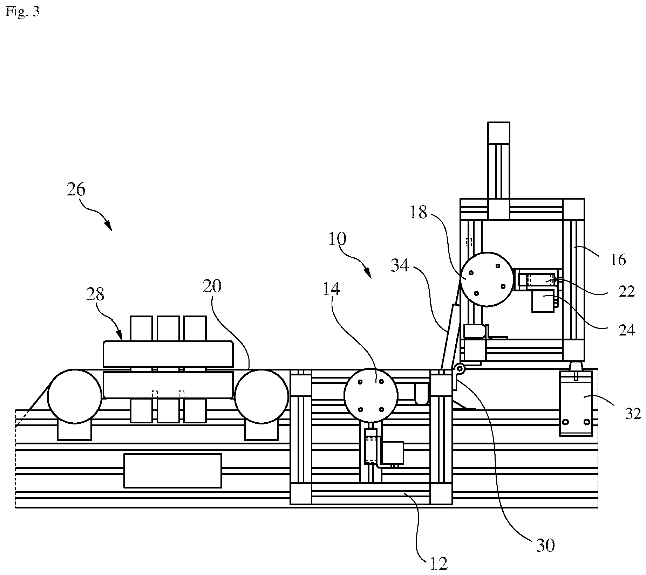

Das erste Gestell 12 und das zweite Gestell 16 können über ein Scharnier 30 schwenkbar miteinander gekoppelt sein. In der in Fig. 2 dargestellten geschlossenen Position kann zudem das zweite Gestell 16 ortsfest mit dem ersten Gestell 12 verbunden, insbesondere lösbar arretiert, sein, damit Eigenschwingungen der Messeinrichtung 10 bei beiden Walzen 14, 18 identisch auftreten, In der in Fig. 3 dargestellten geöffneten Position der Messeinrichtung 10 ist das zweite Gestell 16 um ca. 90° aufgeklappt. Das zweite Gestell 16 kann hierbei an einem die Endlage in der geöffneten Position definierenden Gummipuffer 32 anliegen. Die Schwenkbewegung des zweiten Gestells 16 kann mit Hilfe von an dem ersten Gestell 12 und an dem zweiten Gestell 16 befestigten Gasdruckfedern 34 gedämpft werden.

## Patentansprüche

1. Messeinrichtung zur Detektion von lokalen Verdickungen in einer Folienbahn (20), insbesondere einer Extrusions- und/oder Coextrusionsfolie, mit
einer ersten Walze (14) zum Abrollen an der entlangbewegbaren Folienbahn (20),
einer mittelbar über die Folienbahn (20) an der ersten Walze (14) abstützbaren zweiten Walze (18) zum Abrollen an der entlangbewegbaren Folienbahn (20),
wobei die zweite Walze (18) in Dickenrichtung der entlangbewegbaren Folienbahn (20), insbesondere in vertikaler Richtung, nachgiebig geführt ist, und
mindestens ein zur ersten Walze (14) und/oder zur entlangbewegbaren Folienbahn (20) ortsfester Abstandssensor (24) zur Detektion eines Abstands der zweiten Walze (18), **dadurch gekennzeichnet, dass**
die erste Walze (14) in einem ersten Rahmenteil (12) drehbar gelagert ist, wobei die zweite Walze (18) in einem zweiten Rahmenteil (16) drehbar gelagert und linear geführt ist, wobei das zweite Rahmenteil (16) zwischen einer geschlossenen Position und einer geöffneten Position schwenkbar mit dem ersten Rahmenteil (12) gekoppelt ist, wobei insbesondere das zweite Rahmenteil (16) mit dem ersten Rahmenteil (12) in der geschlossenen Position bewegungsfest arretierbar ist.

2. Messeinrichtung nach Anspruch 1 **dadurch gekennzeichnet, dass** der mindestens eine Abstandssensor (24) als berührungslos messender Sensor, insbesondere Laserentfernungsmesser, ausgestaltet ist, wobei die zweite Walze (18) für den mindestens einen Abstandssensor (24) die erste Walze (14) und/oder die Folienbahn (20) vollständig abschattet.

3. Messeinrichtung nach Anspruch 1 oder 2 **dadurch gekennzeichnet, dass** der mindestens eine Abstandssensor (24) mit dem zweiten Rahmenteil (16) befestigt ist.

4. Messeinrichtung nach einem der Ansprüche 1 bis 3 **dadurch gekennzeichnet, dass** eine mit dem mindestens einen Abstandssensor (24) gekoppelte Auswerteeinrichtung vorgesehen ist, wobei die Auswerteeinrichtung ausgestaltet ist in dem Fall einer einen vorgegebenen Schwellwert übersteigende Abstandsänderung der zweiten Walze (18) relativ zu dem mindestens einen Abstandssensors (24) ein Signal auszugeben, wobei das Signal von einer an der Auswerteeinrichtung anschließbaren Markierungseinrichtung zum Markieren eines als defekt bewerteten Längenabschnitts der Folienbahn (20) und/oder einer an der Auswerteeinrichtung anschließbaren Schneideinrichtung zum Abtrennen eines als defekt bewerteten Längenabschnitts der Folienbahn (20) weiterverarbeitbar ist.

5. Förderstrecke zum Fördern einer Folienbahn (20), insbesondere einer Extrusions- und/oder Coextrusionsfolie, mit einer Vortriebseinrichtung zum Vortrieb der Folienbahn (20), einer Messeinrichtung (10) nach einem der Ansprüche 1 bis 4 zur Detektion von lokalen Verdickungen in der durch die Messeinrichtung (10) durchgeführten Folienbahn (20), einer der Messeinrichtung (10) vorgeschalteten Bahnreiningungseinrichtung (28) zur Abtrennung von Verunreinigungen, insbesondere zur Neutralisierung von statischen Ladungen durch mindestens eine aufgebrachte lonenwolke und/oder Absaugung der Verunreinigungen, wobei insbesondere die Messeinrichtung (10) als Ganzes separat abgestützt und/oder gefedert ist.

6. Verfahren zur Detektion von lokalen Verdickungen in einer Folienbahn (20), insbesondere einer Extrusions- und/oder Coextrusionsfolie, mit Hilfe einer Messeinrichtung (10) nach einem der Ansprüche 1 bis 4, mit den Schritten Hindurchbewegen der Folienbahn (20) zwischen der ersten Walze (14) und der auf der ersten Walze (14) abgestützten zweiten Walze (18), wobei die zweite Walze (18) in Dickenrichtung der entlangbewegbaren Folienbahn (20), insbesondere in vertikaler Richtung, nachgiebig geführt ist,
Detektion einer durch lokale Verdickungen verursachten Abstandsänderung der zweiten Walze (18) zur ersten Walze (14) und
in dem Fall, dass eine einen vorgegebenen Schwellwert übersteigende Abstandsänderung der zweiten Walze (18) detektiert wird, Ausgeben des Signals, wobei insbesondere das Signal von einer Markierungseinrichtung zum Markieren eines als defekt bewerteten Längenabschnitts der Folienbahn (20) und/oder einer Schneideinrichtung zum Abtrennen eines als defekt bewerteten Längenabschnitts der Folienbahn (20) weiterverarbeitbar ist.

## Claims

1. Measuring device for detecting local thickenings in a film web (20), in particular an extruded and/or co-extruded film, having
a first roll (14) for rolling on the film web (20) moved along,
a second roll (18), which can be supported on the first roll (14) indirectly via the film web (20), for rolling on the film web (20) moved along,
wherein the second roll (18) is resiliently guided, in particular in the vertical direction, in the thickness direction of the film web (20) moved along,
at least one distance sensor (24) fixed locally in relation to the first roll (14) and/or the film web (20) moved along, for detecting a distance from the second roll (18), **characterized in that**
the first roll (14) is rotatably mounted in a first frame part (12), wherein the second roll (18) is rotatably mounted in a second frame part (16) and is guided linearly, wherein the second frame part (16) is coupled to the first frame part (12) such that it can be pivoted between a closed position and an open position, wherein in particular the second frame part (16) can be locked with the first frame part (12) so as to be fixed against movement when in the closed position.

2. Measuring device according to Claim 1, **characterized in that** the at least one distance sensor (24) is configured as a sensor measuring without contact, in particular a laser rangefinder, wherein the second roll (18) shades the first roll (14) and/or the film web (20) completely from the at least one distance sensor (24).

3. Measuring device according to Claim 1 or 2, **characterized in that** the at least one distance sensor (24) is fixed to the second frame part (16).

4. Measuring device according to one of Claims 1 to 3, **characterized in that** an evaluation device coupled to the at least one distance sensor (24) is provided, wherein the evaluation device is configured to output a signal in the event of a distance change of the second roll (18) relative to the at least one distance sensor (24) exceeding a predefined threshold value, wherein the signal can be processed further by a marking device that can be connected to the evaluation device for marking a length section of the film web (20) that is assessed as defective and/or a cutting device that can be connected to the evaluation device for severing a length section of the film web (20) that is assessed as defective.

5. Conveyor line for conveying a film web (20), in particular an extruded and/or co-extruded film, having a feed device for feeding the film web (20), a measuring device (10) according to one of Claims 1 to 4 for detecting local thickenings in the film web (20) guided through the measuring device (10), a web cleaning device (28) connected upstream of the measuring device (10) for separating contaminants, in particular for neutralizing static charges by means of at least one applied ion cloud and/or sucking the contaminants away, wherein in particular the measuring device (10) as a whole is supported and/or spring-mounted separately.

6. Method for detecting local thickenings in a film web (20), in particular an extruded and/or co-extruded film, with the aid of a measuring device (10) according to one of Claims 1 to 4, having the steps of
moving the film web (20) through between the first roll (14) and the second roll (18) supported on the first roll (14), wherein the second roll (18) is resiliently guided, in particular in the vertical direction, in the thickness direction of the film web (20) moved along,
detecting a distance change of the second roll (18) relative to the first roll (14), caused by local thickenings, and
outputting the signal in the event that a distance change of the second roll (18) exceeding a predefined threshold value is detected, wherein in particular the signal can be processed further by a marking device for marking a length section of the film web (20) that is assessed as defective and/or a cutting device for severing a length section of the film web (20) that is assessed as defective.

## Revendications

1. Dispositif de mesure pour la détection d'épaississements locaux dans une bande de film (20), notamment d'un film d'extrusion et/ou de coextrusion, avec
un premier cylindre (14) pour rouler sur la bande de film (20) mobile le long de celui-ci,
un deuxième cylindre (18) pouvant s'appuyer indirectement par l'intermédiaire de la bande de film (20) sur le premier cylindre (14) pour rouler sur la bande de film (20) mobile le long de celui-ci,
le deuxième cylindre (18) étant guidé de manière flexible dans la direction de l'épaisseur de la bande de film (20) mobile le long de celui-ci, notamment dans la direction verticale, et
au moins un capteur de distance (24) fixe par rapport au premier cylindre (14) et/ou à la bande de film (20) mobile le long de celui-ci, pour la détection d'une distance du deuxième cylindre (18), **caractérisé en ce que**
le premier cylindre (14) est monté de manière rotative dans une première partie de cadre (12), le deuxième cylindre (18) étant monté de manière rotative et guidé linéairement dans une deuxième partie de cadre (16), la deuxième partie de cadre (16) étant couplée à la première partie de cadre (12) de manière à pouvoir pivoter entre une position fermée et une position ouverte, la deuxième partie de cadre (16) pouvant notamment être bloquée avec la première partie de cadre (12) de manière fixe en mouvement dans la position fermée.

2. Dispositif de mesure selon la revendication 1, **caractérisé en ce que** l'au moins un capteur de distance (24) est conçu sous forme de capteur de mesure sans contact, notamment de télémètre laser, le deuxième cylindre (18) occultant complètement le premier cylindre (14) et/ou la bande de film (20) pour l'au moins un capteur de distance (24).

3. Dispositif de mesure selon la revendication 1 ou 2, **caractérisé en ce que** l'au moins un capteur de distance (24) est fixé à la deuxième partie de cadre (16).

4. Dispositif de mesure selon l'une quelconque des revendications 1 à 3, **caractérisé en ce qu'**un dispositif d'évaluation couplé à l'au moins un capteur de distance (24) est prévu, le dispositif d'évaluation étant conçu pour émettre un signal dans le cas d'une modification de distance du deuxième cylindre (18) par rapport à l'au moins un capteur de distance (24) dépassant une valeur de seuil prédéfinie, le signal pouvant être traité ultérieurement par un dispositif de marquage pouvant être raccordé au dispositif d'évaluation pour marquer une section de longueur de la bande de film (20) évaluée comme défectueuse et/ou par un dispositif de coupe pouvant être raccordé au dispositif d'évaluation pour séparer une section de longueur de la bande de film (20) évaluée comme défectueuse.

5. Ligne de transport pour le transport d'une bande de film (20), notamment d'un film d'extrusion et/ou de coextrusion, avec un dispositif d'avancement pour faire avancer la bande de film (20), un dispositif de mesure (10) selon l'une quelconque des revendications 1 à 4 pour la détection d'épaississements locaux dans la bande de film (20) traversant le dispositif de mesure (10), un dispositif de nettoyage de bande (28) placé en amont du dispositif de mesure (10) pour la séparation d'impuretés, notamment pour la neutralisation de charges statiques par au moins un nuage d'ions appliqué et/ou l'aspiration des impuretés, le dispositif de mesure (10) notamment étant supporté et/ou monté sur ressort séparément dans son ensemble.

6. Procédé de détection d'épaississements locaux dans une bande de film (20), notamment d'un film d'extrusion et/ou de coextrusion, à l'aide d'un dispositif de mesure (10) selon l'une quelconque des revendications 1 à 4, avec les étapes suivantes :
le passage de la bande de film (20) entre le premier cylindre (14) et le deuxième cylindre (18) appuyé sur le premier cylindre (14), le deuxième cylindre (18) étant guidé de manière flexible dans la direction de l'épaisseur de la bande de film (20) mobile le long de celui-ci, notamment dans la direction verticale,
la détection d'une modification de distance du deuxième cylindre (18) par rapport au premier cylindre (14), provoquée par des épaississements locaux, et
dans le cas où une modification de distance du deuxième cylindre (18) dépassant une valeur de seuil prédéfinie est détectée, l'émission du signal, le signal pouvant notamment être traité ultérieurement par un dispositif de marquage pour marquer une section de longueur de la bande de film (20) évaluée comme défectueuse et/ou par un dispositif de coupe pour séparer une section de longueur de la bande de film (20) évaluée comme défectueuse.
